# EUROPÄISCHE PATENTSCHRIFT

(11) **EP 2 651 593 B1**
(45) Veröffentlichungstag und Bekanntmachung des Hinweises auf die Patenterteilung: **31.01.2018**
(21) Anmeldenummer: 11802898.4
(22) Anmeldetag: 16.12.2011
(51) Int. Cl.: B01J 35/00, B82Y 30/00, C08K 3/00

(54) **VERFAHREN ZUR HERSTELLUNG VON MIKRO-NANOKOMBINIERTEN WIRKSYSTEMEN**
PROCESS FOR PRODUCING A MICRO-NANO COMBIND EFFECTIVE SYSTEM
PROCÉDÉ POUR LA PRÉPARATION DE SYSTÈMES ACTIFS MICRO-NANO COMBINÉS

(30) Priorität: 17.12.2010 DE 102010063342
(43) Veröffentlichungstag der Anmeldung: 23.10.2013
(73) Patentinhaber: Laser Zentrum Hannover E.V., 30419 Hannover (DE)
(72) Erfinder: BARCIKOWSKI, Stephan, 30419 Hannover (DE); WAGENER, Phillipp, 30165 Hannover (DE); SCHWENKE, Andreas, 30451 Hannover (DE)
(74) Vertreter: Hörschler, Wolfram Johannes
(86) Internationale Anmeldenummer: PCT/EP2011/073031
(87) Internationale Veröffentlichungsnummer: WO 2012/080458

(56) Entgegenhaltungen:
- WO-A1-01/09229
- WO-A1-2010/007117

## Beschreibung

Die Erfindung betrifft ein Verfahren zur Herstellung von mikro-nanokombinierten Wirksystemen, bei denen Nanopartikel einer ersten Komponente mit Mikropartikeln einer zweiten Komponente verbunden sind. Weiterhin betrifft die Erfindung eine Verwendung eines mikro-nanokombinierten Wirksystems.

Nanopartikel enthaltende Wirksysteme werden zum Beispiel in Medizinprodukten eingesetzt. Beim Einsatz von Medizinprodukten kommt es häufig aufgrund von Verunreinigungen mit Bakterien oder Viren zu Infektionen. Die Oberflächen der Medizinprodukte können vor der Besiedelung durch Bakterien und damit vor der Entstehung eines Biofilms, in dem sich die Bakterien einlagern können, durch den Einsatz von metallischen Nanopartikeln aus Silber, Kupfer oder Zink geschützt werden. In feuchter Umgebung setzen metallische Nanopartikel Ionen frei, die beim Kontakt mit Zellwänden von Bakterien deren Absterben bewirken und auf diese Weise einen antibakteriellen Schutz bieten. Wenn die Nanopartikel nur als Beschichtung auf die Oberflächen der Medizinprodukte aufgetragen werden, können sich diese bei mechanischer Belastung ablösen und damit in den Organismus übergehen, was zu toxischen Reaktionen führen kann. Darüber hinaus bieten solch dünne Beschichtungen keinen Langzeitschutz vor der Bildung eines Biofilms. Um Medizinprodukte aus Kunststoff mit einem antibakteriellen Langzeitschutz auszustatten, wird daher eine Volumenfunktionalisierung der kompletten Kunststoffmatrix mit Nanopartikeln durchgeführt. Hierbei werden die Nanopartikel möglichst fein in die Kunststoffmatrix eingebettet, um schon bei niedrigen Partikelkonzentrationen aufgrund der großen wirksamen Partikeloberfläche einen antibakteriellen Schutz zu erreichen. Weitere Gebiete, in denen Nanopartikel Einsatz finden, sind zum Beispiel Katalysatoren und Markierungssubstanzen für einen Plagiatschutz.

Aus EP-B 1 536 848 ist ein Verfahren zur Herstellung eines antimikrobiellen Kunststoffproduktes bekannt. Hierzu wird ein Polymervorprodukt mit einem antimikrobiellen kolloiden Metall behandelt, ein lösliches oder schwerlösliches Salz eines antimikrobiellen Metalls zugesetzt und das Kunststoffprodukt geformt. Das kolloide Metall wird durch eine Reduktion von Metallsalzlösungen hergestellt.

Ein entsprechendes Verfahren, bei dem ein Metallkolloid durch Reduktion von Metallsalzlösungen hergestellt wird und das Kolloid einem Polymer zur Herstellung von im medizinischen Bedarf eingesetzten Kunststoffprodukten zugesetzt wird, ist auch aus EP-B 1 210 386 bekannt.

Nachteil der Herstellung der Kolloide durch Reduktion von Metallsalzen ist, dass nicht ausgeschlossen werden kann, dass im Kolloid gesundheitlich bedenkliche Ausgangsstoffe wie Silbernitrat und organische Stabilisatoren enthalten sind.

Weiterhin ist bei der in EP-B 1 210 386 beschriebenen Behandlung von Bariumsulfat mit kolloidalem Silber nachteilig, dass nach der Behandlung des Bariumsulfats mit dem kolloidalen Silber das Wasser durch Eindampfen und Trocknen bei 70°C komplett entfernt werden muss, was einen großen energetischen Aufwand für die Trocknung bedeutet.

Ein Verfahren und eine Vorrichtung zur Herstellung metallhaltiger organischer Verbindungen sind in WO-A 2010/007117 beschrieben. Hierbei werden Nanopartikel durch ein Laserablationsverfahren hergestellt. Hierzu wird ein Trägerfluid an einem Metallkörper entlang geleitet und durch Laserbestrahlung werden Nanopartikel aus dem Metallkörper abgetragen. Die dabei entstehenden Partikel werden durch die Strömung des Trägerfluides mitgerissen. Die Nanopartikel werden jedoch nur in organischen Flüssigkeiten eingesetzt, wobei diese eine Affinität zu einem Zellbestandteil haben. Diese Nanopartikel enthaltende organische Flüssigkeit kann nicht als Additiv in Polymermaterialien verwendet werden.

Aufgabe der vorliegenden Erfindung ist es, ein Verfahren zur Herstellung von mikro-nanokombinierten Wirksystemen bereitzustellen, das den Nachteil aus dem Stand der Technik nicht aufweist und bei dem insbesondere keine toxikologisch bedenklichen Stoffe bei der Herstellung der Nanopartikel entstehen, die in einem die Nanopartikel enthaltenden Produkt verbleiben.

Gelöst wird die Aufgabe durch ein Verfahren zur Herstellung von mikro-nanokombinierten Wirksystemen, bei denen Nanopartikel einer ersten Komponente mit Mikropartikeln einer zweiten Komponente verbunden sind, das folgende Schritte umfasst:
(a) Erzeugen einer ligandenarme Nanopartikel der ersten Komponente enthaltenden Kolloidsuspension,
(b) Zugabe von Mikropartikeln in die die Nanopartikel enthaltende Kolloidsuspension oder Zugabe der die Nanopartikel enthaltenden Kolloidsuspension in eine die Mikropartikel enthaltende Dispersion und intensives Durchmischen, so dass die Nanopartikel an die Mikropartikel adsorbieren,
(c) Trennen der Mikropartikel mit den daran angebundenen Nanopartikeln von der Flüssigkeit und Trocknen der Mikropartikel mit den daran angebundenen Nanopartikeln.

Der Einsatz ligandenarmer Nanopartikel, die üblicherweise elektrostatisch in der Kolloidsuspension stabilisiert sind, hat den Vorteil, dass die Adsorption der Nanopartikel an den Mikropartikeln nicht durch sterische Abschirmung verhindert wird.

Ligandenarm im Rahmen der vorliegenden Erfindung bedeutet, dass zur Stabilisierung der Kolloidsuspension als Liganden wirkende Additive und weitere Additive höchstens in einer Gesamtmenge beigefügt werden, deren Masse den dreißigsten Teil der Masse der Nanopartikel in der Kolloidsuspension nicht übersteigt. Unter ligandenarm werden auch ligandenfreie Partikel verstanden, bei denen zur Stabilisierung der Kolloidsuspension keine als Liganden wirkende Additive und keine weiteren Additive beigefügt werden, die also rein elektrostatisch stabilisiert sind.

Die Herstellung der ligandenarme Nanopartikel enthaltenden Kolloidsuspension erfolgt durch Abtragen eines die erste Komponente enthaltenden Substrats durch Energieeintrag mit einem Laser, wobei das die erste Komponente enthaltende Substrat in einer Flüssigkeit positioniert ist, so dass das abgetragene Substrat sofort in der Flüssigkeit unter Bildung der Kolloidsuspension zu Nanopartikeln erstarrt. Die Herstellung der Nanopartikel durch Energieeintrag mit einem Laser erzeugt zunächst ligandenfreie Nanopartikel, deren Adsorptionseffizienz im Vergleich zu Nanopartikeln, die durch andere Verfahren hergestellt werden, zum Beispiel chemisch synthetisierter Nanopartikeln, tensidstabilisierten Nanopartikeln, deutlich verbessert ist. Durch die ligandenfreien Nanopartikel lässt sich daher das mikro-nanokombinierte Wirksystem effizient herstellen.

In einer Ausführungsform werden gezielt Liganden bis zu einer maximalen Konzentration, die bestimmt ist dadurch, dass der Massenanteil der als Liganden wirkenden Additive höchstens den dreißigsten Teil der Masse der Nanopartikel ausmacht, zur Stabilisierung der Kolloidsuspension eingesetzt. Der Einsatz der Liganden ermöglicht eine stärkere Freisetzung von Ionen aus den Nanopartikeln und damit eine verbesserte Wirksamkeit. Bei Verwendung als Katalysator lässt sich durch gezielten Einsatz von Liganden eine spezifische Katalyse erreichen.

Als mikro-nanokombiniertes Wirksystem wird im Rahmen der vorliegenden Erfindung ein System bezeichnet, das Mikropartikel enthält, an die Nanopartikel adsorbiert sind. Die Nanopartikel befinden sich dabei einzeln verteilt auf der Oberfläche der Mikropartikel.

Als Nanopartikel werden im Rahmen der vorliegenden Erfindung Partikel bezeichnet, die eine mittlere Partikelgröße im Bereich von 1 bis 50 nm und insbesondere im Bereich von 5 bis 20 nm aufweisen.

Mikropartikel sind im Rahmen der vorliegenden Erfindung Partikel, die eine Partikelgröße im Bereich von 0,1 bis 100 µm, bevorzugt im Bereich von 0,1 bis 5 µm und insbesondere im Bereich von 0,3 bis 1 µm aufweisen.

Die erste Komponente ist vorzugsweise ein Metall, insbesondere ein Metall der Gruppen 9, 10 und 11 des Periodensystems der Elemente, ein Erdalkalimetall oder Zink oder eine Mischung oder Legierung zweier oder mehrerer dieser Metalle. Wenn das Metall der ersten Komponente ein Erdalkalimetall ist, so ist Magnesium insbesondere bevorzugt. Besonders bevorzugte Metalle der Gruppen 9, 10 und 11 des Periodensystems der Elemente sind Silber, Gold, Platin und Kupfer.

Als Flüssigkeit, in der das die erste Komponente enthaltende Substrat während des Energieeintrags mit dem Laser positioniert ist, eignen sich Wasser oder organische Lösungsmittel. Geeignete organische Lösungsmittel sind zum Beispiel Aceton, Ethanol oder Isopropanol. Der Einsatz eines geeigneten organischen Lösungsmittels oder von Wasser ist dabei auch abhängig vom Material der ersten Komponente. Wenn die erste Komponente zum Beispiel ein Metall der Gruppen 9, 10 oder 11 des Periodensystems der Elemente, insbesondere Silber, Platin oder Gold ist, wird vorzugsweise Wasser als Flüssigkeit verwendet. Bei Einsatz von Wasser ist es besonders bevorzugt, keimfreies und destilliertes Wasser einzusetzen. Der Einsatz von keimfreiem destilliertem Wasser erlaubt die Herstellung von Produkten unter keimfreien Bedingungen, wie dies für medizinische Komponenten notwendig ist.

Wenn als Material der ersten Komponente zum Beispiel Magnesium, Zink oder Kupfer eingesetzt wird, so ist es vorteilhaft als Flüssigkeit ein organisches Lösungsmittel, insbesondere Aceton, Ethanol oder Isopropanol einzusetzen. Durch den Einsatz des organischen Lösungsmittels kann der Grad der Oxidation der Nanopartikel beeinflusst werden. Eine weitere Möglichkeit zur Beeinflussung des Oxidationsgrades ist der Einsatz von Liganden, beispielsweise durch Zugabe geringer Mengen Natriumcitrat.

Der Laser, der zur Herstellung der Nanopartikel eingesetzt wird, ist vorzugsweise ein ultrakurzgepulster Festkörperlaser. Der Vorteil eines ultrakurzgepulsten Festkörperlasers, mit einer Pulsdauer im Femtosekunden- bis Nanosekunden-Bereich, liegt in der Möglichkeit, Nanopartikel auch in brennbaren Lösungsmitteln herzustellen ohne dass Pyrolyseprodukte dabei entstehen. Der ultrakurzgepulste Festkörperlaser eignet sich somit insbesondere auch zur Herstellung der Nanopartikeln in einem organischen Lösungsmittel.

Die Pulsfrequenz des ultrakurzgepulsten Festkörperlasers liegt vorzugsweise im Bereich von 10 bis 2 000 000 Hz, bevorzugt im Bereich 100 bis 10 000 Hz und insbesondere im Bereich von 2000 bis 5000 Hz.

Geeignete Wellenlängen für den Festkörperlaser liegen im Bereich von 100 nm bis 10 µm, bevorzugt im Bereich von 300 nm bis 1100 nm und insbesondere bei 1064 nm.

Als Festkörperlaser eignet sich dabei jeder beliebige, dem Fachmann bekannte Festkörperlaser, der ultrakurzgepulst betrieben werden kann. Um eine hohe Produktivität zu erzielen ist es weiterhin bevorzugt, wenn ein Laser eingesetzt wird, der eine möglichst hohe Leistung aufweist.

Das die erste Komponente enthaltende Substrat, das durch den Energieeintrag mit einem Laser verdampft wird, kann jede beliebige geeignete Form aufweisen. So kann das die erste Komponente enthaltende Substrat zum Beispiel in Form eines Stabes, als Platte, als Prisma oder als Draht vorliegen. Weiterhin ist es auch möglich, dass die erste Komponente in Form von Mikropartikeln vorliegt.

Die erste Komponente kann im Substrat sowohl als Reinstoff vorliegen, dieser weist dann vorzugsweise eine Reinheit von mindestens 99,9 Gew.-% auf. Alternativ ist es auch möglich, als erste Komponente eine Legierung, beispielsweise eine Legierung aus Silber und Gold einzusetzen. Hierbei kann der Anteil der einzelnen Metalle in der Legierung beliebig gewählt werden. Bevorzugt ist auch hier, dass der Anteil an weiteren Stoffen, zum Beispiel weiteren Metallen oder anderen Verunreinigungen, die zusätzlich zu den Legierungsmetallen enthalten sein können, kleiner als 0,1 Gew.-% ist.

Neben einer Legierung aus Silber und Gold ist selbstverständlich auch jede beliebige andere Legierung, die die Metalle enthält, aus denen die Nanopartikel hergestellt werden sollen, einsetzbar. Insbesondere bei Einsatz des erfindungsgemäß hergestellten mikro-nanokombinierten Wirksystems ist es jedoch bevorzugt, wenn das Metall der ersten Komponente Silber, Gold, Platin oder Kupfer oder eine Legierung aus mindestens zwei dieser Metalle, beispielsweise eine Legierung aus Silber und Gold ist. Weiterhin kann die erste Komponente auch eine Mischung aus zwei oder mehreren Metallen sein.

Zur Herstellung der Nanopartikel ist es bevorzugt, wenn das Substrat von der Flüssigkeit angeströmt oder umströmt wird, während die erste Komponente aus dem Substrat durch Energieeintrag mit dem Laser abgetragen wird. Besonders bevorzugt ist es, wenn die Nanopartikel in einer Kammer erzeugt werden, die von der Flüssigkeit durchströmt wird und in der das Substrat positioniert ist. Durch das Durchströmen der Kammer mit der Flüssigkeit werden die durch Energieeintrag mit dem Laser erzeugten Nanopartikel direkt mit der Flüssigkeit aus der Kammer ausgetragen. Die Konzentration an Nanopartikeln in der Flüssigkeit kann dann zum Beispiel durch die Strömungsgeschwindigkeit der Flüssigkeit und die Rate, mit der das Substrat durch den Lasereintrag abgetragen wird, eingestellt werden.

Um das Substrat zu verdampfen, wird der Laser vorzugsweise von außen durch ein für den Laser transparentes Fenster auf das Substrat geleitet. Hierbei ist es möglich, das für den Laser transparente Fenster als Linse zu gestalten, mit der der Laser gebündelt und/oder umgelenkt werden kann.

Insbesondere in einem diskontinuierlichen Prozess wird die maximal mögliche Konzentration an Nanopartikeln in der Flüssigkeit durch die konzentrationsabhängige Neigung der nicht ligandenstabilisierten Nanopartikel zu agglomerieren begrenzt. Geeignete Konzentrationen, bei denen die Nanopartikel nicht agglomerieren, liegen üblicherweise bei bis zu 0,1 mg/ml.

Als Material für die Mikropartikel der zweiten Komponente eignen sich in der Flüssigkeit unlösliche Salze, Keramiken, Metalle, natürliche oder synthetische Mineralien, Kunststoffe oder auch magnetische Substanzen. Hierbei wird das Material zum Beispiel auch anhand der gewünschten Eigenschaften des mikro-nanokombinierten Wirksystems gewählt. Bevorzugte Materialien für die zweite Komponente sind Bariumsulfat, Calciumsulfat, Strontiumsulfat, Titanoxid, Aluminiumoxid, Siliziumoxid, Zeolithe, Glimmer, Talk, Kaolin, Calciumcarbonat, Calciumphosphat, Hydroxylapatit, Eisenoxid, Tantal, Latex, Stärke, Cellulose und deren Derivate. Besonders bevorzugt als Material der zweiten Komponente sind Bariumsulfat und Calciumphosphat. Der Einsatz von Bariumsulfat ist insbesondere bei der Verwendung des mikro-nanokombinierten Wirksystems für Medizinprodukte bevorzugt, da das Bariumsulfat als Röntgenkontrastmittel dient. Wenn das hergestellte Medizinprodukt zum Beispiel ein zentralvenöser Katheter ist, dient das Bariumsulfat zum Beispiel zur Überprüfung der Lage des Katheters innerhalb der Vene.

Bei Einsatz des mikro-nanokombinierten Wirksystems außerhalb von medizinischen Anwendungen können auch von Bariumsulfat verschiedene Materialien eingesetzt werden. Auch bei der Herstellung von Produkten in der Medizintechnik kann von Bariumsulfat verschiedenes Material für die zweite Komponente eingesetzt werden, wenn eine Funktion der zweiten Komponente als Röntgenkontrastmittel nicht erforderlich ist.

Erfindungsgemäß werden die Nanopartikel an die Mikropartikel adsorbiert. Hierzu ist es notwendig, die Mikropartikel mit den Nanopartikeln in Kontakt zu bringen. Um die Mikropartikel mit den Nanopartikeln in Kontakt zu bringen ist es zum Beispiel möglich, die Mikropartikel der die Nanopartikel enthaltenden Kolloidsuspension zuzugeben. Alternativ kann auch die die Nanopartikel enthaltende Kolloidsuspension den Mikropartikeln zugemischt werden.

Insbesondere in der Ausführungsform, in der die Nanopartikel in einer Kammer, die von der Flüssigkeit durchströmt wird, hergestellt werden, ist es bevorzugt, die die Nanopartikel enthaltende Flüssigkeit aus der Kammer in einen Behälter zum Zumischen der Mikropartikel abzuleiten. Alternativ ist es jedoch auch möglich, die Mikropartikel zum Beispiel in die Kammer zuzugeben. In einer weiteren Ausführungsform, insbesondere in einem kontinuierlichen Herstellungsprozess, ist es auch möglich, die Mikropartikel in eine von der Kolloidsuspension durchströmte Leitung zuzugeben. Die Menge der Mikropartikel, die zugegeben werden, ist dabei abhängig von der Konzentration der Nanopartikel in der Kolloidsuspension und der gewünschten Zielbeladung der Mikropartikel.

Alternativ ist es jedoch auch möglich, dass die Menge an Nanopartikeln so groß gewählt wird, dass auf den Mikropartikeln eine Schicht aus Nanopartikeln erzeugt wird, die Poren zwischen den einzelnen Nanopartikeln aufweist. Eine solche dichte Packung an Nanopartikeln auf den Mikropartikeln ist zum Beispiel dann sinnvoll, wenn eine große spezifische Oberfläche des Materials der Nanopartikel gewünscht ist, beispielsweise bei Einsatz der Nanopartikel als Katalysator.

Um die Eigenschaften des mikro-nanokombinierten Systems zu beeinflussen, ist es weiterhin möglich, nach dem Vermischen von Mikropartikeln und Nanopartikeln Additive zuzugeben. Hierbei ist es bevorzugt, die Zugabe der Additive erst nach dem Vermischen von Mikropartikeln und Nanopartikeln durchzuführen, um zu vermeiden, dass sich an der Oberfläche der Nanopartikel Liganden bilden, die die Adsorption der Nanopartikel auf den Mikropartikeln negativ beeinflussen können.

Um die Mikropartikel gut in der Flüssigkeit zu verteilen ist es vorteilhaft, wenn die Flüssigkeit, die die Mikropartikel und die Nanopartikel enthält, gut durchmischt wird. Dies ist zum Beispiel durch Rühren mit einem geeigneten Rührer möglich. Als Rührer kann dabei jede beliebige, dem Fachmann bekannte Rührer eingesetzt werden. Durch das Durchmischen wird insbesondere verhindert, dass die Mikropartikel während des Adhäsionsvorgangs in der Flüssigkeit sedimentieren.

Eine verbesserte Anbindung der Nanopartikel an die Mikropartikel kann sich ergeben, wenn während der Durchmischung in Schritt (b) zumindest teilweise Ultraschall an die Flüssigkeit angelegt wird. Der Ultraschall kann dabei während des gesamten Durchmischungsvorganges angelegt werden oder alternativ ist es auch möglich, einzelne Ultraschallpulse anzulegen. Auch ist es möglich, zeitweilig während des Durchmischens Ultraschall anzulegen.

Insbesondere bei Herstellung des mikro-nanokombinierten Wirksystems durch ein kontinuierliches Verfahren ist es vorteilhaft, die Flüssigkeit, mit der die Kammer durchströmt wird, in der die Nanopartikel durch Energieeintrag mit einem Laser erzeugt werden, zunächst einem Behälter zu entnehmen, die Kammer zu durchströmen und anschließend wieder in den Behälter zurückzuführen. In den Behälter werden dann die Mikropartikel zugegeben.

Um zu vermeiden, dass die Mikropartikel in der Flüssigkeit die Herstellung der Nanopartikel in der Kammer negativ beeinflussen, ist es bevorzugt, die Mikropartikel zunächst durch ein geeignetes Filtersystem, beispielsweise durch eine Ultrafiltration, im Behälter zurückzuhalten.

Nach der Herstellung des mikro-nanokombinierten Wirksystems ist es bevorzugt, die Mikropartikel mit den darauf adsorbierten Nanopartikeln aus der Flüssigkeit abzutrennen. Hierzu ist es zum Beispiel möglich, zunächst die Partikel aufzukonzentrieren, was beispielsweise mithilfe einer Ultrafiltration durchgeführt werden kann. Alternativ ist es auch möglich, die Partikel durch Sedimentation und Dekantieren oder durch Zentrifugieren von der Flüssigkeit zu trennen.

Je nach Verfahren, durch das die Partikel von der Flüssigkeit abgetrennt werden, kann es notwendig sein, dass nach der Abtrennung der Flüssigkeit noch ein Deagglomerieren oder Mahlen eines bei der Flüssigkeitsabtrennung entstehenden Kuchens durchgeführt wird. So kann zum Beispiel beim Dekantieren, Sedimentieren oder Filtern ein fester Kuchen entstehen, der aufgebrochen werden muss. Durch das Deagglomerieren oder Mahlen wird der entstandene Kuchen auf Mikropartikelgröße zerkleinert.

Das mikro-nanokombinierte Wirksystem kann zum Beispiel als funktionales Additiv zu einer Polymermischung zur Herstellung von Kunststoffteilen eingesetzt werden. Alternativ ist es auch möglich, das mikro-nanokombinierte Wirksystem als Katalysator zu verwenden. Ein weiterer möglicher Einsatzbereich ist die Verwendung als Markierungssubstanz zum Schutz vor Plagiaten. So ist es zum Beispiel möglich, das erfindungsgemäße Wirksystem in einen Werkstoff zur Herstellung von Produkten, insbesondere einen Kunststoff, einzuarbeiten. Als mikro-nanokombiniertes Wirksystem eignet sich zum Beispiel eine Legierung aus 3 5% Silber und 65% Gold auf Bariumsulfat. Anhand der wellenlängenspezifischen Absorption der Nanopartikel aus der Legierung kann durch einfache Lichtabsorptionsmessung erfasst werden, ob ein Produkt ein Original oder ein Plagiat ist. Alternativ kann durch ein Analyseverfahren, durch das die enthaltenen Stoffe nachgewiesen werden, die Echtheit eines Produktes nachweisen. Das eingesetzte mikro-nanokombinierte Wirksystem kann dabei gezielt an bestimmten Stellen des Produktes eingearbeitet sein oder aber gleichmäßig verteilt im gesamten Produkt.

Bei Zugabe des mikro-nanokombinierten Wirksystems als funktionales Additiv zu einer Polymermischung, ist es insbesondere bevorzugt, wenn die Polymermischung zur Herstellung von medizinischen Produkten eingesetzt wird. In diesem Fall werden die Materialien des mikro-nanokombinierten Wirksystems so gewählt, dass das mikro-nanokombinierte Wirksystem antimikrobiell wirkt. Die Mikropartikel können dabei entweder als Trägerpartikel der wirksamen Nanopartikel dienen oder auch selbst eine Wirkung aufweisen. So ist es zum Beispiel möglich, dass die Mikropartikel als Röntgenkontrastmittel wirken und die Nanopartikel zum Beispiel eine antimikrobielle Wirkung aufweisen. Eine antimikrobielle Wirkung haben zum Beispiel Nanopartikel aus Silber. Zur Optimierung der antimikrobiellen Eigenschaften ist es zum Beispiel möglich, das Silber als Legierung mit einem edleren Metall, beispielsweise Platin, Gold, Ruthenium, Rhodium oder Palladium einzusetzen. Der Einsatz von Legierungen für das mikro-nanokombinierte Wirksystem ist insbesondere vorteilhaft bei Verwendung als Katalysator oder als Additiv für den Plagiatschutz.

Wenn die Mikropartikel als Röntgenkontrastmittel dienen sollen, können diese, wie zuvor bereits beschrieben, zum Beispiel aus Bariumsulfat hergestellt sein. Alternativ ist es auch möglich, Tantal als Material für die Mikropartikel zu verwenden.

Wenn eine Mischung verschiedener Nanopartikel eingesetzt werden soll, werden in einer ersten Ausführungsform, wenn die Nanopartikel jeweils als Kolloidsuspension bereitgestellt werden, zunächst die die Nanopartikel enthaltenden Kolloidsuspensionen gemischt. Anschließend erfolgt dann die Zugabe der Mikropartikel. Alternativ ist es auch möglich, zum Beispiel zwei Substrate oder ein eine Legierung oder eine Mischung aus mehreren Materialien enthaltendes Substrat zur Herstellung der Nanopartikel einzusetzen und auf diese Weise eine Kolloidsuspension herzustellen, in der bereits Nanopartikel enthalten sind, die jeweils entweder unterschiedliche Materialien, beispielsweise in Form einer Legierung enthalten oder in der Nanopartikel aus unterschiedlichen Materialien enthalten sind.

Neben dem Einsatz als Additiv in Kunststoffteilen können die mikro-nanokombinierten Wirksysteme zum Beispiel auch als Katalysator verwendet werden. Bei Einsatz als Katalysator ist im Allgemeinen der geschwindigkeitsbestimmende Schritt die Adsorption des Substrats an der freien Oberfläche des Katalysators. Im Unterschied zu chemisch generierten Nanopartikeln, die durch Oberflächenfunktionalisierung stabilisiert sind, ist bei ligandenfreien Nanopartikeln, die zum Beispiel durch Energieeintrag mit einem Laser hergestellt werden, die aktive Oberfläche größer, da kein Teil der Oberfläche durch eine Oberflächenfunktionalisierung belegt ist.

Insbesondere bei Wirksystemen, die zur Katalyse von Reaktionen eingesetzt werden, dient die Anbindung an Mikropartikel insbesondere zur leichteren Entfernung aus einer Reaktionsflüssigkeit. Auf diese Weise kann der Katalysator wieder verwendet werden. Eine verbesserte Abtrennung des Katalysators lässt sich zum Beispiel auch dadurch erreichen, dass Mikropartikel aus einem magnetischen Material eingesetzt werden. In diesem Fall kann der Katalysator magnetisch aus der Reaktionsflüssigkeit abgetrennt werden.

Als Katalysator eignet sich jedes beliebige, dem Fachmann bekannte Material, das als Katalysator für eine Reaktion eingesetzt werden kann. Gebräuchliche Katalysatoren umfassen zum Beispiel Platin, Gold, Ruthenium, Rhodium oder Palladium.

Bei Verwendung des mikro-nanokombinierten Wirksystems als Additiv zu einer Polymermischung ist ein weiterer Vorteil, dass aufgrund der eingesetzten Mikropartikel, an die die Nanopartikel adsorbieren, eine gleichmäßige Verteilung im Polymermaterial möglich ist. Insbesondere wird vermieden, dass die Nanopartikel agglomerieren.

## Patentansprüche

1. Verfahren zur Herstellung von mikro-nanokombinierten Wirksystemen, bei denen Nanopartikel einer ersten Komponente mit einer mittleren Partikelgröße im Bereich von 1 bis 50 nm mit Mikropartikeln einer zweiten Komponente mit einer Partikelgröße im Bereich von 0,1 bis 100 µm verbunden sind, folgende Schritte umfassend:
(a) Erzeugen einer ligandenarme Nanopartikel der ersten Komponente enthaltenden Kolloidsuspension, wobei zur Stabilisierung der Kolloidsuspension als Liganden wirkende Additive höchstens in einer Gesamtmenge beigefügt werden, deren Masse den dreißigsten Teil der Masse der Nanopartikel in der Kolloidsuspension nicht übersteigt, wobei zur Herstellung der ligandenarme Nanopartikel enthaltenden Kolloidsuspension ein die erste Komponente enthaltendes Substrat durch Energieeintrag mit einem Laser abgetragen wird, wobei das die erste Komponente enthaltende Substrat in einer Flüssigkeit positioniert ist, so dass das verdampfte Substrat sofort in der Flüssigkeit unter Bildung einer Kolloidsuspension zu Nanopartikeln erstarrt,
(b) Zugabe von Mikropartikeln in die die Nanopartikel enthaltende Kolloidsuspension oder Zugabe der die Nanopartikel enthaltenden Kolloidsuspension in eine die Mikropartikel enthaltende Dispersion und intensives Durchmischen, so dass die Nanopartikel an die Mikropartikel adsorbieren,
(c) Trennen der Mikropartikel mit den daran angebundenen Nanopartikeln von der Flüssigkeit und Trocknen der Mikropartikel mit den daran angebundenen Nanopartikeln.

2. Verfahren gemäß Anspruch 1, **dadurch gekennzeichnet, dass** der Laser ein ultrakurzgepulster Festkörperlaser ist.

3. Verfahren gemäß Anspruch 1 oder 2, **dadurch gekennzeichnet, dass** das die erste Komponente enthaltende Substrat ein Stab, eine Platte, ein Prisma oder ein Draht ist oder in Form von Mikropartikeln vorliegt.

4. Verfahren gemäß einem der Ansprüche 1 bis 3, **dadurch gekennzeichnet, dass** die erste Komponente ein Metall ist, vorzugsweise ein Metall der Gruppen 9, 10 und 11 des Periodensystems der Elemente, ein Erdalkalimetall oder Zink oder eine Mischung oder Legierung zweier oder mehrerer dieser Metalle.

5. Verfahren gemäß einem der Ansprüche 1 bis 4, **dadurch gekennzeichnet, dass** die ligandenarmen Nanopartikel ligandenfrei sind.

6. Verfahren gemäß einem der Ansprüche 1 bis 5, **dadurch gekennzeichnet, dass** die zweite Komponente ein in der Flüssigkeit unlösliches Salz, eine Keramik, ein Metall, ein natürliches oder synthetisches Mineral, ein Kunststoff oder eine magnetische Substanz ist.

7. Verfahren gemäß einem der Ansprüche 1 bis 6, **dadurch gekennzeichnet, dass** die zweite Komponente ausgewählt ist aus der Gruppe bestehend aus Bariumsulfat (BaSO₄), Calciumsulfat, Strontiumsulfat, Titanoxid, Aluminiumoxid, Siliziumoxid, Zeolithe, Glimmer, Talk, Kaolin, Calciumcarbonat, Calciumphosphat, Hydroxylapatit, Eisenoxid, Tantal, Latex, Stärke, Cellulose oder deren Derivaten.

8. Verfahren gemäß einem der Ansprüche 1 bis 7, **dadurch gekennzeichnet, dass** das Substrat von der Flüssigkeit angeströmt oder umströmt wird, während die erste Komponente durch Energieeintrag mit dem Laser abgetragen wird.

9. Verfahren gemäß einem der Ansprüche 1 bis 8, **dadurch gekennzeichnet, dass** der Laser von außen durch ein für den Laser transparentes Fenster auf das Substrat geleitet wird.

10. Verfahren gemäß Anspruch 9, **dadurch gekennzeichnet, dass** das für den Laser transparente Fenster als Linse gestaltet ist, mit der der Laser gebündelt und/oder umgelenkt werden kann.

11. Verfahren gemäß einem der Ansprüche 1 bis 10, **dadurch gekennzeichnet, dass** die Flüssigkeit Wasser oder ein organisches Lösungsmittel ist.

12. Verfahren gemäß einem der Ansprüche 1 bis 11, **dadurch gekennzeichnet, dass** die Mikropartikel mit den daran angebundenen Nanopartikeln mittels Ultrafiltration aus der Flüssigkeit abgetrennt werden.

13. Verfahren gemäß einem der Ansprüche 1 bis 12, **dadurch gekennzeichnet, dass** während der Durchmischung in Schritt (b) zumindest teilweise Ultraschall an die Flüssigkeit angelegt wird.

14. Verfahren gemäß einem der Ansprüche 1 bis 13, **dadurch gekennzeichnet, dass** die Mikropartikel mit den daran angebundenen Nanopartikeln durch Sedimentation und Dekantieren von der Flüssigkeit getrennt werden.

15. Verwendung des nach dem Verfahren gemäß einem der Ansprüche 1 bis 14 hergestellten mikro-nanokombinierten Wirksystems als funktionales Additiv zu einer Polymermischung zur Herstellung von Kunststoffteilen oder als Katalysator.

## Claims

1. Process for the production of micro-nano-combined active systems where nanoparticles of a first component with average particle size in the range from 1 to 50 nm have been bound to microparticles of a second component with particle size in the range from 0.1 to 100 µm, comprising the following steps:
(a) production of a colloidal suspension comprising low-ligand-content nanoparticles of the first component, where the total mass added of additives acting as ligands to stabilize the colloidal suspension does not exceed one thirtieth of the mass of the nanoparticles in the colloidal suspension, where, for the production of the colloidal suspension comprising low-ligand-content nanoparticles, a substrate comprising the first component is ablated via energy introduction using a laser, where the substrate comprising the first component has been positioned in a liquid so that the vapourized substrate immediately solidifies to give nanoparticles in the liquid with formation of a colloidal suspension,
(b) addition of microparticles into the colloidal suspension comprising the nanoparticles, or addition of the colloidal suspension comprising the nanoparticles into a dispersion comprising the microparticles, and intensive mixing, so that the nanoparticles are adsorbed onto the microparticles,
(c) separation of the microparticles, with the nanoparticles bound thereon, from the liquid, and drying of the microparticles with the nanoparticles bound thereon.

2. Process according to Claim 1, **characterized in that** the laser is an ultrashort-pulse solid-state laser.

3. Process according to Claim 1 or 2, **characterized in that** the substrate comprising the first component is a rod, a sheet, a prism or a wire or takes the form of microparticles.

4. Process according to any of Claims 1 to 3, **characterized in that** the first component is a metal, preferably a metal of groups 9, 10 or 11 of the periodic table of the elements, an alkaline earth metal or zinc or a mixture or alloy of two or more of the said metals.

5. Process according to any of Claims 1 to 4, **characterized in that** the low-ligand-content nanoparticles are ligand-free.

6. Process according to any of Claims 1 to 5, **characterized in that** the second component is a salt insoluble in the liquid, a ceramic, a metal, a natural or synthetic mineral, a plastic or a magnetic substance.

7. Process according to any of Claims 1 to 6, **characterized in that** the second component is selected from the group consisting of barium sulfate (BaSO₄), calcium sulfate, strontium sulfate, titanium oxide, aluminium oxide, silicon oxide, zeolites, mica, talc, kaolin, calcium carbonate, calcium phosphate, hydroxyapatite, iron oxide, tantalum, latex, starch, cellulose or a derivative thereof.

8. Process according to any of Claims 1 to 7, **characterized in that** the liquid flows onto or around the substrate while the first component is ablated via energy introduction using the laser.

9. Process according to any of Claims 1 to 8, **characterized in that** the laser is guided onto the substrate from the outside via a window that is transparent to the laser.

10. Process according to Claim 9, **characterized in that** the window that is transparent to the laser is designed as lens which can focus and/or deflect the laser.

11. Process according to any of Claims 1 to 10, **characterized in that** the liquid is water or an organic solvent.

12. Process according to any of Claims 1 to 11, **characterized in that** the microparticles, with the nanoparticles bound thereon, are separated from the liquid by means of ultrafiltration.

13. Process according to any of Claims 1 to 12, **characterized in that** during the mixing in step (b) the liquid is at least to some extent exposed to ultrasound.

14. Process according to any of Claims 1 to 13, **characterized in that** the microparticles, with the nanoparticles bound thereon, are separated from the liquid by sedimentation and decanting.

15. Use of the micro-nano-combined active system produced by the process according to any of Claims 1 to 14 as functional additive to a polymer mixture for the production of plastics parts, or as catalyst.

## Revendications

1. Procédé pour la préparation de systèmes actifs micro-nano-combinés, dans lesquels des nanoparticules d'un premier composant, présentant une grosseur moyenne de particule dans la plage de 1 à 50 nm, sont reliées à des microparticules d'un deuxième composant présentant une grosseur moyenne de particule dans la plage de 0,1 à 100 µm, comprenant les étapes suivantes :
(a) production d'une suspension colloïdale contenant des nanoparticules pauvres en ligands du premier composant, des additifs agissant comme ligands étant ajoutés pour la stabilisation de la suspension colloïdale au maximum en une quantité totale, dont la masse ne dépasse pas le trentième de la masse des nanoparticules dans la suspension colloïdale, où, pour la préparation de la suspension colloïdale contenant des nanoparticules pauvres en ligands, un substrat contenant le premier composant est érodé par introduction d'énergie par un laser, le substrat contenant le premier composant étant positionné dans un liquide de manière telle que le substrat évaporé se solidifie immédiatement en nanoparticules dans le liquide avec formation d'une suspension colloïdale,
(b) addition de microparticules dans la suspension colloïdale contenant les nanoparticules ou addition de la suspension colloïdale contenant les nanoparticules dans une dispersion contenant les microparticules et mélange intensif de telle sorte que les nanoparticules s'adsorbent sur les microparticules,
(c) séparation des microparticules avec les nanoparticules qui y sont liées du liquide et séchage des microparticules avec les nanoparticules qui y sont liées.

2. Procédé selon la revendication 1, **caractérisé en ce que** le laser est à laser à corps solide à impulsions ultracourtes.

3. Procédé selon la revendication 1 ou 2, **caractérisé en ce que** le substrat contenant le premier composant est une barre, une plaque, un prisme ou un fil ou se trouve sous forme de microparticules.

4. Procédé selon l'une quelconque des revendications 1 à 3, **caractérisé en ce que** le premier composant est un métal, de préférence un métal des groupes 9, 10 et 11 du système périodique des éléments, un métal alcalino-terreux ou le zinc ou un mélange ou un alliage de deux, ou plus, de ces métaux.

5. Procédé selon l'une quelconque des revendications 1 à 4, **caractérisé en ce que** les nanoparticules pauvres en ligands sont exemptes de ligands.

6. Procédé selon l'une quelconque des revendications 1 à 5, **caractérisé en ce que** le deuxième composant est un sel insoluble dans le liquide, une céramique, un métal, un minéral naturel ou synthétique, un matériau synthétique ou une substance magnétique.

7. Procédé selon l'une quelconque des revendications 1 à 6, **caractérisé en ce que** le deuxième composant est choisi dans le groupe constitué par le sulfate de baryum (BaSO₄), le sulfate de calcium, le sulfate de strontium, l'oxyde de titane, l'oxyde d'aluminium, l'oxyde de silicium, les zéolithes, le mica, le talc, le kaolin, le carbonate de calcium, le phosphate de calcium, l'hydroxylapatite, l'oxyde de fer, le tantale, le latex, l'amidon, la cellulose ou leurs dérivés.

8. Procédé selon l'une quelconque des revendications 1 à 7, **caractérisé en ce que** le liquide s'écoule sur ou autour du substrat pendant que le premier composant est érodé par introduction d'énergie par le laser.

9. Procédé selon l'une quelconque des revendications 1 à 8, **caractérisé en ce que** le laser est guidé, depuis l'extérieur, sur le substrat à travers une fenêtre transparente pour le laser.

10. Procédé selon la revendication 9, **caractérisé en ce que** la fenêtre transparente pour le laser est conçue sous forme d'une lentille qui permet de mettre en faisceau et/ou de dévier le laser.

11. Procédé selon l'une quelconque des revendications 1 à 10, **caractérisé en ce que** le liquide est de l'eau ou un solvant organique.

12. Procédé selon l'une quelconque des revendications 1 à 11, **caractérisé en ce que** les microparticules avec les nanoparticules qui y sont liées sont séparées du liquide par ultrafiltration.

13. Procédé selon l'une quelconque des revendications 1 à 12, **caractérisé en ce que**, pendant le mélange dans l'étape (b), des ultrasons sont appliqués, au moins en partie, sur le liquide.

14. Procédé selon l'une quelconque des revendications 1 à 13, **caractérisé en ce que** les microparticules avec les nanoparticules qui y sont liées sont séparées du liquide par sédimentation et décantation.

15. Utilisation du système actif micro-nano-combiné préparé selon le procédé selon l'une quelconque des revendications 1 à 14 comme additif fonctionnel d'un mélange de polymères pour la fabrication de pièces en matériau synthétique ou comme catalyseur.
